# EUROPÄISCHE PATENTSCHRIFT

(11) **EP 2 749 335 B1**
(45) Veröffentlichungstag und Bekanntmachung des Hinweises auf die Patenterteilung: **28.06.2017**
(21) Anmeldenummer: 13191531.6
(22) Anmeldetag: 05.11.2013
(51) Int. Cl.: B01D 29/11, B01D 29/35, B01D 29/58, F02M 61/16

(54) **Zweiteiliger Partikelfilter**
Two-part particle filter
Filtre à particules en deux parties

(30) Priorität: 27.12.2012 DE 102012224388
(43) Veröffentlichungstag der Anmeldung: 02.07.2014
(73) Patentinhaber: ROBERT BOSCH GMBH, 70442 Stuttgart (DE)
(72) Erfinder: Comert, Alper, 16140 Nilüfer Bursa (TR); Clauss, Helmut, 71735 Eberdingen (DE)

(56) Entgegenhaltungen:
- EP-A2- 1 918 576
- DE-A1- 4 237 469
- DE-A1- 10 220 632
- DE-A1- 10 238 569

## Beschreibung

Partikelfilter, umfassend einen stabförmigen Filterkörper, der in einem Zulaufkanal einer Kraftstoffeinspritzvorrichtung eingeführt ist, wobei der stabförmige Filterkörper mindestens eine Eintrittsöffnung und eine Vielzahl von an einer Mantelfläche des stabförmigen Filterkörper angeordneten Austrittsöffnungen aufweist.

### Stand der Technik

Fluid- oder gasführende Komponenten an Einspritzsystemen sollten, zur Gewährleistung ihrer Funktion, vor einem Eintrag von zu großen Partikeln durch einen Partikelfilter geschützt werden. Der Partikelfilter sollte zusätzlich zum Systemfilter an jeder Komponente angebracht werden, um die Komponente sowohl vor der Partikelbeladung der weiteren Systemkomponenten des Montageschmutzes als auch vor eventuell über die Laufzeit entstehenden Partikeln in den Systemkomponenten zu schützen.

Aus dem allgemein bekannten Stand der Technik gehen sowohl Spaltfilter als auch Lochfilter hervor. Dabei sind Spaltfilter eindimensionale Filter mit einer Filtergröße, die einer Spalthöhe entspricht, und Lochfilter zweidimensionale Filter, dessen Filtergröße einer Lochdurchmessergröße entspricht.

Aufgrund immer kleiner werdender Führungsspiele und immer kleineren Arbeitsspalten werden Einspritzsysteme auch gegenüber kleinsten Partikeln immer empfindlicher. Die Dimensionierung der Filter zur Filterung kleinster Partikel ist technisch nur sehr schwer oder sehr kostenaufwendig realisierbar.

Um Beschädigungen von Kraftstofffeinspritzventilen durch Verunreinigung in Kraftstoff zu verhindern, werden die gemäß dem Stand der Technik bekannten Kraftstofffilter, auch in einer Ausbildung als Stabfilter bekannt, üblicherweise in jedes Kraftstoffeinspritzventil angeordnet.

So wird beispielsweise der aus der DE 198 32 940 A1 beschriebene stabförmige Filterkörper in einen Zulaufkanal eines Kraftstoffeinspritzventils eingepresst. Der Kraftstofffilter selbst weist mindestens eine Einlassöffnung auf, durch die der unter Hochdruck stehende Kraftstoff eingeführt wird. Eventuelle mitgeführte Späne und Verunreinigungen verbleiben in dem Filterkörper, da die Auslassöffnungen einen wesentlich geringeren Durchmesser aufweisen als die der Einlassöffnungen.

Ferner offenbart die DE 10 2004 062 008 A1 einen Kraftstofffilter, insbesondere bestehend aus einem stabförmigen Filterkörper, der in einem Zulaufkanal einer Kraftstoffeinspritzvorrichtung eines Common-Rail-Systems eingeführt ist. Der Filterkörper weist eine Einlassöffnung und eine Vielzahl von Auslassöffnungen auf. Die Auslassöffnungen sind an den Übergängen der Auslassöffnungen von der jeweiligen Innenwand zur Auslassöffnung mit einem Rundungsgrad versehen. Dadurch weist der Kraftstofffilter über seine Gebrauchsdauer einen nahezu konstanten Durchflusskoeffizienten auf. Weitere Filter sind in der EP 1918576 und der DE 4237469 offenbart. Die Aufgabe der vorliegenden Erfindung ist es daher, einen Partikelfilter dahingehend zu verbessern, dass sowohl die Fertigung des Partikelfilters als auch die Einstellung der Partikelfiltrationsgröße vereinfacht und optimiert wird. Ferner soll durch die Erfindung die Partikelfiltrationsgröße einfach und kostengünstig beliebig klein eingestellt werden können.

Zur vorrichtungstechnischen Lösung der Aufgabe wird der Partikelfilter mit den Merkmalen des Anspruchs 1 vorgeschlagen. Vorteilhafte Weiterbildungen der Erfindung sind in den Unteransprüchen 2 und 3 angegeben.

Offenbarung der Erfindung Vorrichtungstechnisch wird die Aufgabe dadurch gelöst, dass der stabförmige Filterkörper aus einer ersten und einer zweiten stabförmigen Buchse besteht, wobei die erste stabförmige Buchse in die zweite stabförmige Buchse einsteckbar ist. Die erste stabförmige Buchse wird dabei über die Eintrittsöffnung in die zweite stabförmige Buchse eingesteckt. Vorteilhafterweise kann die erste stabförmige Buchse an einer inneren Stirnfläche der zweiten stabförmigen Buchse zur Anlage kommen, sodass dort eine axiale Abstützung der ersten stabförmigen Buchse stattfindet. Somit weist die zweite stabförmige Buchse nur eine axiale Öffnung auf. Demgegenüber ist die erste stabförmige Buchse rohrförmig und weist zwei axiale Öffnungen auf, wobei eine davon die Eintrittsöffnung darstellt.

Erfindungsgemäß ist ein Spalt zwischen einer Außenumfangsfläche der ersten stabförmige Buchse und einer Innenumfangsfläche der zweiten stabförmigen Buchse kleiner als die gewünschte Partikelfiltrationsgröße der Austrittsöffnungen. Dadurch wird verhindert, dass Partikel zwischen die Außenumfangsfläche der ersten stabförmigen Buchse und die Innenumfangsfläche der zweiten stabförmigen Buchse gelangen.

Des Weiteren ist ein Lochmuster der Austrittsöffnungen in der ersten stabförmigen Buchse identisch zu einem Lochmuster der Austrittsöffnungen in der zweiten stabförmigen Buchse. Somit sind die Austrittsöffnungen an der ersten stabförmigen Buchse deckungsgleich mit den Austrittsöffnungen an der zweiten stabförmigen Buchse. Vorteilhafterweise besitzen die einzelnen Austrittsöffnungen eine kreisrunde Form. Über die Anzahl und die Querschnittsfläche der Austrittsöffnungen lässt sich eine Durchflussrate eines Volumenstromes einstellen.

Die Erfindung schließt die technische Lehre ein, dass mindestens eine der beiden stabförmigen Buchsen eine Geometrie zum Verdrehen oder axialen Verschieben einer der beiden stabförmigen Buchsen relativ zur anderen stabförmigen Buchse aufweist. Über diese Geometrie ist ein Drehmoment oder ein Zugkraft in die jeweilige stabförmige Buchse einleitbar. Denkbar sind beispielsweise Geometrieformen wie Aussparungen oder Stege. Ferner fallen auch Geometriekonturen wie Vier- oder Sechskantkonturen darunter. Solche Geometriekonturen können insbesondere an einer Innenumfangsfläche der ersten stabförmigen Buchse eingebracht werden.

Gemäß einer die Erfindung weiter verbessernden Maßnahme wird vorgeschlagen, dass die beiden stabförmigen Buchsen aus einem metallischen Werkstoff oder einem Polymerwerkstoff ausgebildet sind. Die Werkstoffauswahl hängt im Wesentlichen von den Betriebsbedingungen ab. So würde im Hochdruckbereich beispielsweise ein metallischer Werkstoff verbaut werden, wo hingegen im Niederdruckbereich auch ein Polymerwerkstoff eingesetzt werden könnte.

Vorzugsweise weist die zweite stabförmige Buchse in einem angrenzenden Bereich der Eintrittsöffnung einen nicht perforierten Bereich der Mantelfläche auf, welcher eine größere Wandstärke und einen größeren Außendurchmesser als der restliche Partikelfilter aufweist und zur axialen Fixierung des Partikelfilters innerhalb des Zulaufkanals dient. Dieser nicht perforierte Bereich erstreckt sich über mindestens ein Achtel einer Länge des Partikelfilters. Der Partikelfilter ist in dem Zulaufkanal eingepresst und somit kraftschlüssig mit dem Zulaufkanal verbunden. Über die ausreichend große Länge des nicht perforierten Bereichs wird eine Schiefstellung oder ein Kippen des Partikelfilters sicher verhindert.

Zur Herstellung des zuvor beschriebenen Partikelfilters wird ferner ein Verfahren mit folgenden Verfahrensschritten angegeben:
a) Einstecken der ersten stabförmigen Buchse in die zweite stabförmige Buchse,
b) Einbringen der Austrittsöffnungen in die Mantelflächen der beiden stabförmigen Buchsen,
c) Verdrehen oder axiales Verschieben der ersten stabförmigen Buchse relativ zur zweiten stabförmigen Buchse, um eine Partikelfiltrationsgröße der Austrittsöffnungen einzustellen, und
d) Fixieren der beiden stabförmigen Buchsen.

Vorzugsweise werden die Austrittsöffnungen in Schritt b) durch Laserbohren, Erodieren, Stanzen oder mechanisches Bohren in die Mantelflächen der beiden stabförmigen Buchsen eingebracht. Vorteilhafterweise sollten die Austrittsöffnungen eine kreisrunde Form aufweisen, um die Kerbwirkung zu verringern und die Strömungsverhältnisse zu optimieren.

Des Weiteren bevorzugt ist, dass während des Verdrehens oder axialen Verschiebens der ersten stabförmigen Buchse relativ zur zweiten stabförmigen Buchse in Schritt c) eine kontinuierliche Durchflussprüfung zur Einstellung einer Durchflussrate eines Volumenstromes vorgenommen wird. Durch das Verdrehen oder axiale Verschieben der ersten stabförmigen Buchse relativ zur zweiten stabförmigen Buchse verengt sich die Querschnittsfläche der Austrittsöffnungen, wodurch die gewünschte Partikelfiltrationsgröße eingestellt wird. Über eine dafür vorgesehen Geometrieform an einem der beiden stabförmigen Buchsen wird das Drehmoment zum Verdrehen oder die Zugkraft zum axialen Verschieben einer der beiden stabförmigen Buchsen relativ zur anderen stabförmigen Buchse eingeleitet. Hierdurch kann eine wesentlich kleinere Querschnittsfläche der Austrittsöffnungen und somit eine wesentlich kleinere Partikelfiltrationsgröße eingestellt werden als diese allein durch die eingebrachten Austrittsöffnungen möglich ist.

Es wird weiterhin vorgeschlagen, dass die beiden stabförmigen Buchsen in Schritt d) durch eine formschlüssige oder stoffschlüssige Verbindung fixiert werden. Als stoffschlüssige Verbindung werden insbesondere Schweißverfahren oder Klebeverfahren vorgeschlagen. Besonders bevorzugt werden die beiden stabförmigen Buchsen durch Laserschweißen fixiert. Eine formschlüssige Verbindung sollte durch Verquetschung oder Verstemmung der beiden stabförmigen Buchsen realisiert werden.

### Kurze Beschreibung der Zeichnung

Bevorzugte Ausführungsformen der Erfindung werden nachfolgend anhand der beigefügten Zeichnungen näher beschrieben. Diese zeigen:
- Figur 1: eine Querschnittdarstellung eines erfindungsgemäßen Partikelfilters, der in einem Zulaufkanal einer Kraftstoffeinspritzvorrichtung eingeführt ist,
- Figur 2: ein perspektivische Darstellung des erfindungsgemäßen Partikelfilters aus Figur 1, und
- Figur 3: eine vergrößerte, teilweise Querschnittdarstellung des erfindungsgemäßen Partikelfilters aus Figur 1.

### Ausführliche Beschreibung der Zeichnungen

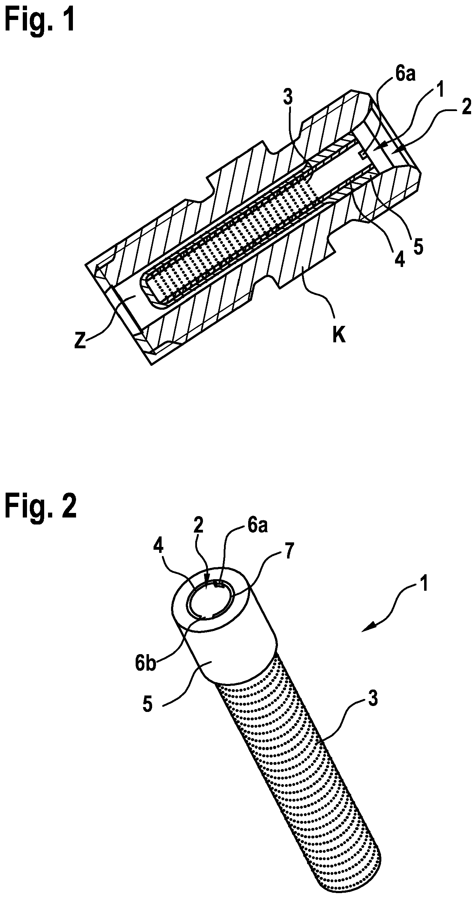

Figur 1 zeigt einen Partikelfilter, umfassend einen stabförmigen Filterkörper 1, der in einem Zulaufkanal Z einer Kraftstoffeinspritzvorrichtung K eingeführt ist. Der stabförmige Filterkörper 1 besteht aus einer ersten und einer zweiten stabförmigen Buchse 4, 5. Aufgrund der Anordnung des stabförmigen Filterkörpers 1 in einem Hochdrucksystem sind die beiden stabförmigen Buchsen 4, 5 aus einem metallischen Werkstoff ausgebildet. Dabei ist die erste stabförmige Buchse 4 in die zweite stabförmige Buchse 5 eingesteckt. Ferner weist der stabförmige Filterkörper 1 eine Eintrittsöffnung 2 an einer Stirnseite auf durch die das Fluid in den Partikelfilter einströmt. Eine Vielzahl von Austrittsöffnungen 3 ist an einer Mantelfläche des Filterkörpers 1 angeordnet, durch die das Fluid aus dem Filterkörper 1 wieder herausströmen kann.

Die Querschnittsfläche der Austrittsöffnungen 3 ist derart bemessen, dass eine Filterung des Fluides vorgenommen wird und Partikel die einen größeren Durchmesser als der Durchmesser der Austrittsöffnungen 3 aufweisen nicht aus dem stabförmigen Filterkörper 1 entweichen können. Die Querschnittsfläche der Austrittsöffnungen 3 wird durch ein Verdrehen oder axiales Verschieben der ersten stabförmigen Buchse 4 relativ zur zweiten stabförmigen Buchse 5 eingestellt. Die zweite stabförmige Buchse 5 weist in einem angrenzenden Bereich der Eintrittsöffnung 2 einen nicht perforierten Bereich der Mantelfläche auf, welcher eine größere Wandstärke und einen größeren Außendurchmesser als der restliche Partikelfilter aufweist und zur Fixierung des Partikelfilters innerhalb des Zulaufkanals Z dient.

In Figur 2 ist der Partikelfilter in einer perspektivischen Darstellung abgebildet. Aus dieser Darstellung sind zwei Aussparungen 6a, 6b an der Stirnseite der ersten stabförmigen Buchse 4 erkennbar. Diese beiden Aussparungen 6a, 6b ermöglichen die Einbringung eines Drehmomentes durch ein dafür vorgesehenes Werkzeug, wodurch das Verdrehen der ersten stabförmigen Buchse 4 relativ zur zweiten stabförmigen Buchse 5 realisiert wird, um die Querschnittsfläche der Austrittsöffnungen 3 einzustellen. Die Einstellung der Querschnittsfläche der Austrittsöffnungen 3 ermöglicht nicht nur die Einstellung der Partikelfiltrationsgröße, sondern darüber hinaus auch die Einstellung einer Durchflussrate eines Volumenstromes. Ferner weist der Partikelfilter eine durch Laserschweißen erzeugte Schweißnaht 7 auf, die zur Fixierung der beiden stabförmigen Buchsen 5 dient.

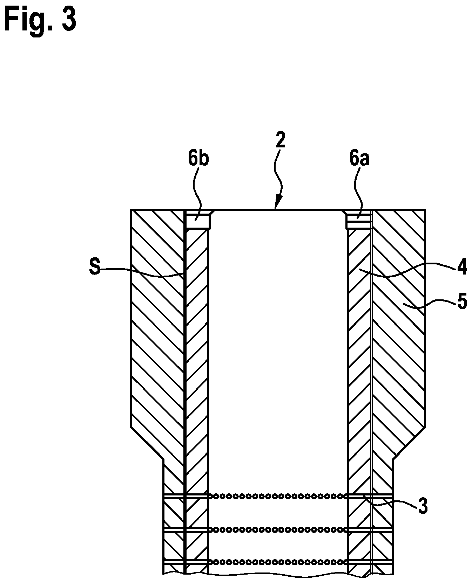

Figur 3 stellt eine vergrößerte, teilweise Schnittdarstellung des Partikelfilters dar zwischen einer Außenumfangsfläche der ersten stabförmige Buchse 4 und einer Innenumfangsfläche der zweiten stabförmigen Buchse 5 ist ein Spalt S ausgebildet, der kleiner als eine gewünschte Partikelfiltrationsgröße der Austrittsöffnungen 3 ist. Es ist ersichtlich, dass ein Lochmuster der Austrittsöffnungen 3 in der ersten stabförmigen Buchse 4 identisch zu einem Lochmuster der Austrittsöffnungen 3 in der zweiten stabförmigen Buchse 4 ist. Dies wird dadurch erreicht, dass im Rahmen der Herstellung des Partikelfilters zunächst einmal die erste stabförmige Buchse 4 in die zweite stabförmige Buchse 5 eingesteckt wird und danach die Einbringung der Austrittsöffnungen 3 in die Mantelflächen der beiden stabförmigen Buchsen 4, 5 erfolgt. Ein geeignetes Verfahren stellt das Laserbohren dar. Somit sind die Austrittsöffnungen 3 in der ersten stabförmigen Buchse 4 deckungsgleich mit den Austrittsöffnungen 3 in der zweiten stabförmigen Buchse 5.

Die Ausführungsbeispiele sind nicht als Einschränkung der Erfindung zu verstehen. Vielmehr sind im Rahmen der vorliegenden Offenbarung zahlreiche Modifikationen möglich, die beispielsweise durch Kombination oder Abwandlung von einzelnen in Verbindung mit den in der allgemeinen Beschreibung und Ausführungsformen sowie den Ansprüchen beschriebenen und in den Zeichnungen enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten führen.

So ist es beispielsweise möglich, eine andere Werkstoffauswahl zu treffen und die beiden stabförmigen Buchsen 4, 5, sofern es die Betriebsbedingungen erlauben, aus einem Polymerwerkstoff auszubilden. Darüber hinaus ist es denkbar eine andere Geometrie als die Aussparungen 6a, 6b an mindestens einer der stabförmigen Buchsen 4, 5 auszubilden, um das Drehmoment oder die Zugkraft einzuleiten. Eine zweckmäßige Geometrie stellen beispielsweise Stege dar. Ferner ist die Fixierung der beiden stabförmigen Buchsen 4, 5 auch durch andere Verfahren, die eine stoffschlüssige oder formschlüssige Verbindung herstellen können möglich, wie zum Beispiel Kleben oder Verstemmen. Es ist ebenfalls denkbar, das Einströmen des Fluides über die Austrittsöffnungen 3 zu realisieren und das Ausströmen des Fluides über die mindestens eine Eintrittsöffnung 2 zu realisieren. Mit anderen Worten können die Austrittsöffnungen 3 in der Mantelfläche als Eintrittsöffnungen fungieren, durch die das Fluid in den stabförmige Filterkörper 1 eintritt, wobei demgegenüber die mindestens eine Eintrittsöffnung 2 als Austrittsöffnung fungiert, durch die das beim Einströmen in den stabförmige Filterkörper 1 gefilterte Fluid wieder ausströmen kann.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Partikelfilter, umfassend einen stabförmigen Filterkörper (1), der in einen Zulaufkanal (Z) einer Kraftstoffeinspritzvorrichtung (K) einführbar ist, wobei der stabförmige Filterkörper (1) mindestens eine Eintrittsöffnung (2) und eine Vielzahl von an einer Mantelfläche des stabförmigen Filterkörper (1) angeordneten Austrittsöffnungen (3) aufweist und der stabförmige Filterkörper (1) aus einer ersten und einer zweiten stabförmigen Buchse (4, 5) besteht, wobei die erste stabförmige Buchse (4) in die zweite stabförmige Buchse (5) über die Eintrittsöffnung eingesteckt ist,
**dadurch gekennzeichnet, dass** ein Lochmuster der Austrittsöffnungen (3) in der ersten stabförmigen Buchse (4) identisch zu einem Lochmuster der Austrittsöffnungen (3) in der zweiten stabförmigen Buchse (4) ist und mindestens eine der beiden stabförmigen Buchsen (4, 5) eine Geometrie zum Verdrehen oder axialen Verschieben einer der beiden stabförmigen Buchsen (4, 5) relativ zur anderen stabförmigen Buchse (5, 4) aufweist,
wobei die erste stabförmige Buchse (4) rohrförmig ausgebildet ist und zwei axiale Öffnungen aufweist, wobei eine davon die Eintrittsöffnung (2) darstellt,
wobei ein Spalt (S) zwischen einer Außenumfangsfläche der ersten stabförmige Buchse (4) und einer Innenumfangsfläche der zweiten stabförmigen Buchse (5) kleiner als eine gewünschte Partikelfiltrationsgröße der Austrittsöffnungen (3) ist wobei die zweite stabförmige Buchse (5) nur eine axiale Öffnung aufweist.

2. Partikelfilter nach Anspruch 1,
**dadurch gekennzeichnet, dass** die beiden stabförmigen Buchsen (4, 5) aus einem metallischen Werkstoff oder einem Polymerwerkstoff ausgebildet sind.

3. Partikelfilter nach Anspruch 1,
**dadurch gekennzeichnet, dass** die zweite stabförmige Buchse (5) in einem angrenzenden Bereich der Eintrittsöffnung (2) einen nicht perforierten Bereich der Mantelfläche aufweist, welcher eine größere Wandstärke und einen größeren Außendurchmesser als der restliche Partikelfilter aufweist und zur Fixierung des Partikelfilters innerhalb des Zulaufkanals (Z) dient.

## Claims

1. Particle filter, comprising a rod-shaped filter body (1) which can be inserted into an inflow duct (Z) of a fuel injection device (K), wherein the rod-shaped filter body (1) has at least one inlet opening (2) and a multiplicity of outlet openings (3) arranged on a shell surface of the rod-shaped filter body (1), and the rod-shaped filter body (1) is composed of a first and a second rod-shaped sleeve (4, 5), wherein the first rod-shaped sleeve (4) is inserted into the second rod-shaped sleeve (5) via the inlet opening,
**characterized in that** a hole pattern of the outlet openings (3) in the first rod-shaped sleeve (4) is identical to a hole pattern of the outlet openings (3) in the second rod-shaped sleeve (4), and at least one of the two rod-shaped sleeves (4, 5) has a geometry for the rotation or axial displacement of one of the two rod-shaped sleeves (4, 5) relative to the other rod-shaped sleeve (5, 4),
wherein the first rod-shaped sleeve (4) is of tubular form and has two axial openings, wherein one of said openings constitutes the inlet opening (2),
wherein a gap (S) between an outer circumferential surface of the first rod-shaped sleeve (4) and an inner circumferential surface of the second rod-shaped sleeve (5) is smaller than a desired particle filtration size of the outlet openings (3), wherein the second rod-shaped sleeve (5) has only one axial opening.

2. Particle filter according to Claim 1,
**characterized in that** the two rod-shaped sleeves (4, 5) are formed from a metallic material or from a polymer material.

3. Particle filter according to Claim 1,
**characterized in that** the second rod-shaped sleeve (5) has, in a region adjacent to the inlet opening (2), a non-perforated region of the shell surface, which non-perforated region has a greater wall thickness and a greater outer diameter than the rest of the particle filter and serves for the fixing of the particle filter within the inflow duct (Z).

## Revendications

1. Filtre à particules, comprenant un corps de filtre en forme de barre (1), qui peut être introduit dans un canal d'amenée (Z) d'un dispositif d'injection de carburant (K), dans lequel le corps de filtre en forme de barre (1) présente au moins une ouverture d'entrée (2) et une multiplicité d'ouvertures de sortie (3) disposées sur une surface latérale du corps de filtre en forme de barre (1) et le corps de filtre en forme de barre (1) se compose d'une première et d'une deuxième douilles en forme de barre (4, 5), dans lequel la première douille en forme de barre (4) est engagée dans la deuxième douille en forme de barre (5), **caractérisé en ce qu'**un motif de trous des ouvertures de sortie (3) dans la première douille en forme de barre (4) est identique à un motif de trous des ouvertures de sortie (3) dans la deuxième douille en forme de barre (4) et au moins une des deux douilles en forme de barre (4, 5) présente une géométrie permettant la rotation ou le glissement axial d'une des deux douilles en forme de barre (4, 5) par rapport à l'autre douille en forme de barre (5, 4),
dans lequel la première douille en forme de barre (4) est de forme tubulaire et présente deux ouvertures axiales, dans lequel une de celles-ci représente l'ouverture d'entrée (2),
dans lequel une fente (S) entre une surface périphérique extérieure de la première douille en forme de barre (4) et une surface périphérique intérieure de la deuxième douille en forme de barre (5) est plus petite qu'une grosseur désirée de filtrage de particules des ouvertures de sortie (3),
dans lequel la deuxième douille en forme de barre (5) ne présente qu'une seule ouverture axiale.

2. Filtre à particules selon la revendication 1, **caractérisé en ce que** les deux douilles en forme de barre (4, 5) sont formées en un matériau métallique ou en un matériau polymère.

3. Filtre à particules selon la revendication 1, **caractérisé en ce que** la deuxième douille en forme de barre (5) présente dans une région voisine de l'ouverture d'entrée (2) une zone non perforée de la surface latérale, qui présente une plus grande épaisseur de paroi et un plus grand diamètre extérieur que le reste du filtre à particules et sert pour la fixation du filtre à particules à l'intérieur du canal d'amenée (Z).
